Europäisches Patentamt

European Patent Office

Office européen des brevets

(11) Numéro de publication: **0 466 265 A1**

# DEMANDE DE BREVET EUROPEEN

(21) Numéro de dépôt: **91201736.5**

(22) Date de dépôt: **04.07.91**

(51) Int. Cl.5: **G06F 12/12**, G06F 12/08

(30) Priorité: **10.07.90 FR 9008746**

(43) Date de publication de la demande:
**15.01.92 Bulletin 92/03**

(84) Etats contractants désignés:
**DE FR GB**

(71) Demandeur: **LABORATOIRES D'ELECTRONIOUE PHILIPS**
**22, Avenue Descartes**
**F-94450 Limeil-Brévannes(FR)**
(84) **FR**

Demandeur: **N.V. Philips' Gloeilampenfabrieken**
**Groenewoudseweg 1**
**NL-5621 BA Eindhoven(NL)**
(84) **DE GB**

(72) Inventeur: **Deville, Yannick, Société Civile S.P.I.D.**
**156, Boulevard Haussmann**
**F-75008 Paris(FR)**

(74) Mandataire: **Landousy, Christian et al**
**Société Civile S.P.I.D. 156, Boulevard Haussmann**
**F-75008 Paris(FR)**

(54) **Dispositif de contrôle pour une mémoire tampon à partitionnement reconfigurable.**

(57) Dispositif de contrôle pour une mémoire tampon qui distingue des informations de type "instruction" et des informations de type "donnée", et de moyens de remplacement (40) qui remplacent des informations stockées par des informations courantes selon au moins un algorithme de remplacement. Il comprend des moyens de partitionnement (30) qui tendent à limiter, à une quantité prédéterminée, une quantité d'au moins un desdits types d'informations. Lorsqu'une information courante a à être chargée, les moyens de partitionnement (30), d'abord calculent une quantité globale de mémoire occupée à ce moment par des informations de type limité, puis comparent la quantité globale et la quantité prédéterminée,

. et lorsque la quantité globale est inférieure ou égale à la quantité prédéterminée, les moyens de remplacement (40) mettent en oeuvre un algorithme classique de remplacement,

. et lorsque la quantité globale est supérieure à ladite quantité prédéterminée, les moyens de remplacement (40) chargent l'information courante en priorité en remplaçant une information stockée remplaçable de type limité ou à défaut en remplaçant une information stockée de type non limité.

La valeur de ladite quantité limitée est réactualisable.

Les moyens de partitionnement (30) et les moyens de remplacement (40) peuvent être des moyens programmés.

Application : ordinateurs, microordinateurs.

EP 0 466 265 A1

FIG.3

L'invention concerne un dispositif de contrôle pour une mémoire tampon munie de moyens de partitionnement reconfigurable qui distinguent des informations de type "instruction" et des informations de type "donnée", et de moyens de remplacement qui remplacent des informations stockées par des informations courantes selon au moins un algorithme de remplacement.

Les méthodes de remplacement s'appliquent plus particulièrement à des systèmes comportant une mémoire hiérarchisée et/ou une mémoire virtuelle. Elles concernent donc en particulier la plupart des ordinateurs. Elles permettent de gérer une mémoire paginée (mémoire centrale), des caches (mémoire cache) et des traducteurs d'adresses (Translation Lookaside Buffers TLB) de tels ordinateurs.

Un système à mémoire hiérarchisée comporte un processeur et un organe de stockage d'informations ayant une grande capacité de stockage appelé mémoire de masse (disques durs, bandes...). Du fait de la lenteur d'exécution de cette dernière, il est nécessaire d'intercaler un ou plusieurs niveaux intermédiaires de mémoire entre le processeur et cette mémoire de masse. Ce nombre de niveaux dépend de la complexité du système considéré. Plus le niveau de mémoire considéré est proche du processeur plus ce niveau a une vitesse de fonctionnement élevée, mais plus il a une capacité de stockage faible. De ce fait chaque niveau de mémoire ne contient qu'une partie des informations que contient le niveau qui le suit immédiatement du côté de la mémoire de masse. La capacité d'un niveau étant limitée, il s'ensuit que lorsque le processeur délivre une adresse qui est absente de ce niveau, le système de gestion de la mémoire doit chercher l'information dans un niveau amont et la charger dans le niveau originellement adressé. Si ce dernier est plein, le système de gestion de la mémoire doit supprimer l'information qui est présente dans un des éléments-mémoire constitutifs de la mémoire tampon afin d'allouer sa place à la nouvelle information. Il est donc nécessaire de définir une méthode de remplacement qui permette de conserver dans les niveaux proches du processeur les informations les plus utiles. Lorsqu'il est nécessaire d'aller la chercher très en amont dans le système hiérarchisé, il y a une perte considérable de temps.

Un problème de remplacement similaire se pose dans les systèmes à mémoire virtuelle. Pour éviter de traduire à chaque accès le numéro de page virtuelle en numéro de page physique, on conserve dans un petit registre tampon appelé traducteur d'adresses (Translation Lookaside Buffers TLB) quelques couples "page virtuelle, page physique" qui ont été utilisés. Quand une nouvelle page est adressée il faut choisir le couple à supprimer du traducteur d'adresses.

Différents algorithmes de remplacement ont été proposés notamment ceux décrits dans "Cache memories, A.J. SMITH, Computing Surveys, vol. 14, n°3, 1982".

Les trois algorithmes les plus classiques sont :

LRU (Least Recently Used en langue anglaise) :

cet algorithme remplace l'élément qui est resté inutilisé le plus longtemps.

FIFO (First In First Out) : cet algorithme remplace l'élément qui est présent depuis le plus longtemps.

Random : cet algorithme remplace un élément au hasard.

En comparant les algorithmes entre eux en déterminant un taux d'échec c'est-à-dire le taux d'adresses appelées par le processeur qui ne sont pas trouvées dans le niveau de mémoire considéré, on a observé que, dans la plupart des cas l'algorithme LRU donne les meilleures performances.

Généralement, une mémoire tampon contient à la fois des instructions et des données numériques.

Le terme "information" sera utilisé ici pour désigner indistinctement deux types d'informations soit une "instruction" soit une "donnée". Le contenu de la mémoire tampon, exprimé par un rapport entre quantité de données et quantité d'instructions, évolue au fil du temps suivant l'algorithme de remplacement qui tient compte des adresses présentées en entrée mais qui ne tient généralement pas compte du type d'informations utilisées. De ce fait, on n'obtient pas des performances optimales et le pourcentage d'accès à la mémoire conduisant à un échec est assez élevé. Ce résultat peut s'expliquer de la manière suivante : beaucoup de programmes exécutés conduisent à ce que la plus grande partie des accès du processeur à la mémoire concerne des instructions, tandis que peu d'accès concernent des données. De ce fait, les données contenues dans la mémoire ont tendance à être trop remplacées par des instructions et quand on veut ensuite les réutiliser elles sont absentes de la mémoire et on obtient donc un échec. Inversement, pour certains autres programmes, le taux d'échecs peut être élevé parce que la mémoire contient trop de données et pas assez d'instructions.

Une méthode de gestion d'informations dans une mémoire tampon qui distingue entre des instructions et des données a été proposée dans l'article "Fast memory organization" P. Favre et R. Kuhne IBM Technical Disclosure Bulletin vol .21 n°2 1978. Elle consiste à utiliser une mémoire tampon formée de modules, les uns étant attribués aux instructions et les autres étant attribués aux données à l'aide de deux bus d'informations. Un bloc de contrôle de modules détermine cette attribution.

Mais une telle méthode de gestion présente des inconvénients. En effet, dans une configuration donnée, chaque partie de mémoire tampon attribuée respectivement aux instructions et aux données a une taille fixe, et chaque module attribué à l'un ou à l'autre type d'informations ne peut recevoir que le type d'informations qui lui est attribué. Or les pourcentages d'accès à des instructions et à des données peut varier très fortement suivant le programme exécuté. De ce fait, pour la plupart des programmes, les tailles attribuées aux deux parties sont mal adaptées, ce qui se traduit par un taux d'échecs généralement plus élevé qu'avec une mémoire tampon unique.

Lorsque la configuration dans laquelle se situe une telle mémoire tampon doit être changée il est nécessaire de modifier l'affectation de certains modules ce qui nécessite d'effectuer des opérations de sauvegarde de la totalité de chaque module modifié. La durée de telles opérations constitue une limitation non négligeable de ce type de structure. Il est également nécessaire de reconfigurer les portes d'aiguillage. Si leur nombre est élevé cette durée est également néfaste à un fonctionnement rapide de la mémoire tampon. La mémoire tampon selon cet art antérieur opère en séparant instruction/données mais ne prend pas en compte l'organisation des mémoires tampon classiques pour lesquelles les éléments-mémoire sont organisés en plusieurs classes, (les éléments-mémoire de chaque classe étant repérés par une clé), afin de réduire le nombre des comparateurs nécessaires au repérage des informations stockées. La mémoire tampon de l'art antérieur est ainsi orientée pour un fonctionnement en mode associatif et non pour un mode de fonctionnement par classes.

D'autre part la séparation de la mémoire tampon en deux blocs à affectation prédéterminée induit des problèmes de cohérence entre le contenu des deux blocs. En effet chaque élément-mémoire d'une mémoire tampon va contenir un groupe de mots ayant des adresses successives. Il faut donc bien considérer que lorsqu'on stipule qu'une information est de type "instruction" (respectivement de type "donnée") cela se rapporte au fait que c'est une information de type "instruction" qui est concernée par le remplacement. Or la structure habituelle d'une mémoire tampon étant telle qu'un élément-mémoire peut contenir un groupe de mots d'informations, il n'est pas exclu qu'un mot de type "instruction" (respectivement de type "donnée") concerné fasse partie d'un groupe de mots dans lequel existe également des mots de type "donnée" (respectivement de type "instructions").

Une information du type opposé au type concerné par l'opération en cours peut ainsi être chargée dans la partie qui ne lui était pas attribuée. Ainsi le même bloc d'informations peut être chargé à la fois dans l'une et l'autre partie, une première fois à l'appel d'une "instruction" et une seconde fois à l'appel d'une "donnée". Si alors la valeur du bloc d'informations doit être modifiée, la mise à jour doit être opérée dans les deux parties à la fois. Ceci conduit à un système beaucoup plus compliqué que dans le cas d'une mémoire tampon qui n'est pas séparée en deux parties. Le fait que des informations identiques existent dans les deux parties de la mémoire tampon réduit virtuellement sa taille globale.

Le problème posé consiste donc à réduire le taux d'échecs en prenant en compte le type des informations, en évitant lesdits inconvénients liés à ce mode de remplacement.

La solution à ce problème consiste en ce que les moyens de partitionnement tendent à limiter, à une quantité prédéterminée, une quantité d'au moins un desdits types d'informations, appelé alors type limité, de sorte que lorsqu'une information courante a à être chargée, les moyens de partitionnement, d'abord calculent une quantité globale de mémoire occupée à ce moment par des informations de type limité, puis comparent la quantité globale et la quantité prédéterminée,

. et lorsque la quantité globale est inférieure ou égale à la quantité prédéterminée, les moyens de remplacement mettent en oeuvre un algorithme classique de remplacement,

. et lorsque la quantité globale est supérieure à ladite quantité prédéterminée, les moyens de remplacement chargent l'information courante en priorité en remplaçant une information stockée remplaçable de type limité ou à défaut en remplaçant une information stockée de type non limité.

Ainsi avantageusement on réduit le taux d'échecs en tenant compte du type des informations et également on réduit la complexité de mise en oeuvre sans dupliquer les informations. La cohérence est ainsi satisfaite.

Avantageusement les moyens de remplacement comprennent :

- un bloc RL qui contrôle le remplacement des informations de type limité lorsque la quantité limitée est dépassée et lorsqu'au moins une information de type limité est présente dans les informations stockées remplaçables adressées,

- et un bloc RT qui contrôle le remplacement de toute autre information dans le cas inverse.

Une telle structure distributive est correctement adaptée à la distinction précitée.

Avantageusement la mémoire tampon peut être constituée de plusieurs classes d'éléments-mémoire.

Avantageusement lorsqu'on désire reconfigurer le partitionnement des informations il suffit de charger une nouvelle valeur de la quantité limitée, ce qui ne nécessite aucune sauvegarde des informations déjà stockées, la mémoire tampon évoluant alors, par le fait du remplacement, vers le nouveau partitionnement. La durée de reconfiguration de la mémoire tampon est ainsi très rapide sans autre intervention externe que le chargement de la nouvelle valeur de la quantité limitée. La mémoire tampon possède ainsi une plus grande simplicité de réalisation.

La quantité limitée de mémoire est déterminée par une valeur de remplissage qui est réactualisable. Ainsi dans le cas de l'exécution d'un programme qui coopère avec une telle mémoire tampon il est possible de dimensionner les parties respectives attribuées aux instructions et/ou aux données. Cette valeur peut être fixée avant l'exécution du programme et être chargée dans les moyens de partitionnement qui effectuent cette attribution. Il est également possible que les moyens de partitionnement soient programmés soit pour être chargés selon une suite de valeurs prédéterminées soit pour déterminer, en cours d'exécution du programme, les valeurs les mieux adaptées aux séquences du programme.

L'algorithme de remplacement des informations stockées de type limité, mis en oeuvre lorsque ladite quantité limitée a été dépassée, peut être l'algorithme de remplacement général (restreint aux éléments-mémoire de type limité) utilisé pour remplacer toute autre information stockée dans la mémoire tampon. Il peut s'agir par exemple des algorithmes connus LRU, FIFO, Random ou autre. On peut utiliser cet algorithme général dans le cas limité, ou utiliser un algorithme spécifique. Par exemple en classant les voies selon une suite ordonnée d'indices croissants il est possible de sélectionner rapidement la voie (donc l'élément-mémoire) dans laquelle doit se faire le remplacement en mode limité en déterminant par exemple l'indice de voie le plus faible.

Selon l'invention on peut limiter soit les instructions soit les données. Il est également possible de fixer simultanément une valeur à chacune des quantités limitées attribuées aux deux types d'informations. On peut fixer par exemple deux pourcentages dont la somme est inférieure à 100 %. Ce cas correspond à une utilisation réduite de la capacité de la mémoire tampon.

Préférentiellement on peut fixer deux pourcentages dont la somme est supérieure à 100 %. Ainsi lorsqu'un type d'information se trouve temporairement moins présent, on reporte de la place mémoire qui était disponible pour ce type sur l'autre type d'information. La mémoire tampon se trouve ainsi avantageusement mieux gérée pour intervenir simultanément sur les deux types d'informations.

L'invention sera mieux comprise à l'aide des figures suivantes données à titre d'exemples non limitatifs qui représentent :

Figure 1 : un schéma d'un exemple simplifié de l'organisatin générale 'une mémoire tampon,

Figure 2 : une représentation générale des champs d'informations relatives à un élément-mémoire quelconque selon l'invention,

Figure 3 : un schéma du dispositif de contrôle d'une mémoire tampon selon l'invention,

Figure 4 : une représentation de l'évolution des pourcentages respectifs des instructions et des données dans l'exécution d'un programme en fonction du temps,

Figure 5 : un mode de sélection de voie utilisable pour le remplacement d'informations de type limité dans un mode de réalisation simplifié,

Figure 6 : une représentation de différentes étapes de la méthode de gestion de la mémoire tampon mise en oeuvre dans l'invention.

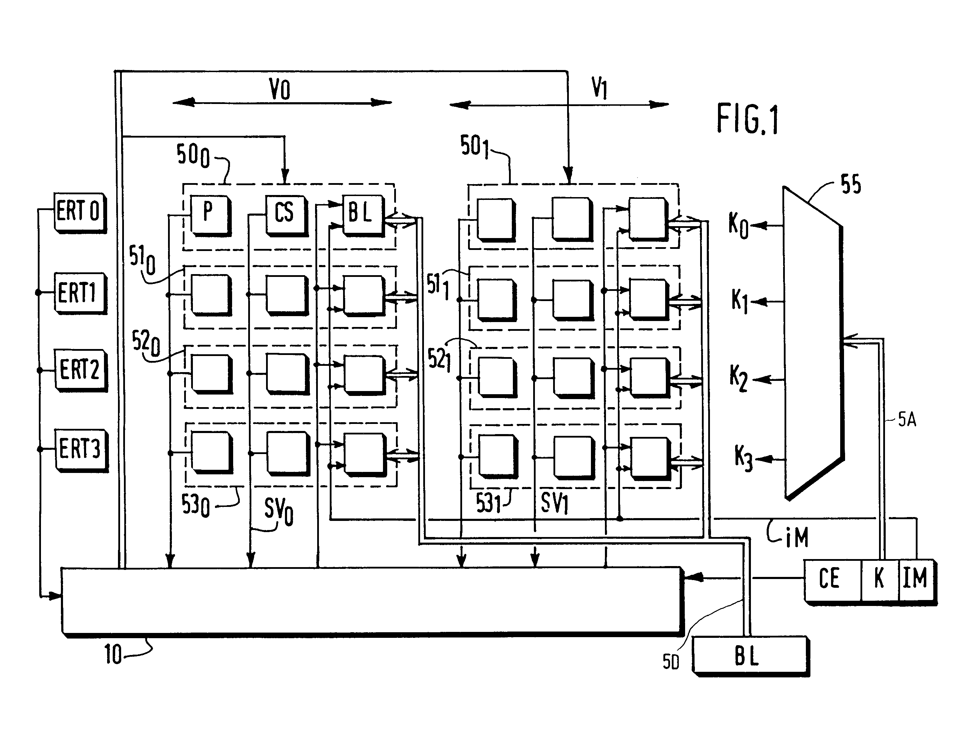

La figure 1 représente un exemple simplifié, mais non limitatif des éléments essentiels d'une mémoire tampon. Elle comprend deux voies $V_0$, $V_1$ renfermant chacune 4 classes $K_0$, $K_1$, $K_2$, $K_3$ d'éléments-mémoire. Une classe contient un élément-mémoire par voie c'est-à-dire 2 selon l'exemple présenté. La voie $V_0$ contient les éléments-mémoire $50_0$, $51_0$, $52_0$, $53_0$. La voie $V_1$ contient les éléments-mémoire $50_1$, $51_1$, $52_1$, $53_1$. La classe $K_0$ contient les éléments-mémoire $50_0$, $50_1$, et cetera pour les autres classes.

Chaque élément-mémoire par exemple $50_0$ comprend plusieurs positions de stockage pour :

- un bit de présence P,
- une clé stockée CS,
- un bloc de données BL, qui contient les informations de l'élément c'est-à-dire des mots ayant des adresses consécutives.

Des champs ERT0, ERT1, ERT2, ERT3 affectés respectivement à chaque classe $K_0$, $K_1$, $K_2$, $K_3$ permettent de déterminer l'état d'occupation de chaque classe d'éléments-mémoire selon l'algorithme de remplacement utilisé. Ces champs ERT peuvent également être spécifiques de chacun des élémentsmémoire de la mémoire tampon.

Les données sont délivrées par un bus de données 5D qui délivre les champs de données BL.

Les adresses sont délivrées par un bus d'adresses 5A qui délivre trois champs :

- un champ de clés d'adresses d'entrée CE,
- un champ de classes d'adresses d'entrée K,
- un champ d'indice de mot IM qui permet de distinguer les mots contenus dans un champ de données BL.

Le champ IM et le bit de présence P peuvent ne pas exister. Lorsque le bit de présence P n'existe pas, une autre solution consiste à avoir un drapeau associé à chaque classe.

Le processeur (non représenté) qui coopère avec la mémoire tampon fournit une adresse sur le bus 5A. Ce processeur peut soit délivrer soit recevoir un mot de données sur le bus 5D. A partir de l'adresse, le décodeur 55 extrait l'indice de classe de l'adresse d'entrée et sélectionne la classe correspondante. Les éléments-mémoire de cette classe sont alors activés. Lorsque par exemple la classe $K_0$ est sélectionnée, les éléments-mémoire $50_0$ et $50_1$ sont activés. Ils transmettent alors leur bit de présence P (s'il existe) et leur clé stockée CS au dispositif de contrôle 10 qui reçoit par ailleurs la clé d'entrée CE de l'adresse d'entrée. Sur le schéma de la figure 1 on a représenté un seul dispositif de contrôle 10 pour l'ensemble de la mémoire tampon. Ceci a l'avantage de minimiser la complexité des moyens matériels. Il est également possible d'utiliser un dispositif de contrôle respectif pour une ou plusieurs classes ce qui présente l'avantage d'une rapidité d'exécution accrue.

Si la recherche de l'adresse donne lieu à un échec, le remplacement consiste à écrire le champ de données BL avec sa clé CS et son bit de présence P (s'il existe) en tenant compte des champs ERT. Si la recherche de l'adresse donne lieu à un succès, l'opération consiste alors à opérer une lecture ou écriture des données BL dans l'élément-mémoire réalisant le succès et à mettre à jour le champ ERT associé. Selon l'algorithme de remplacement mis en oeuvre, le dispositif de contrôle 10 sélectionne à chaque opération l'élément-mémoire concerné.

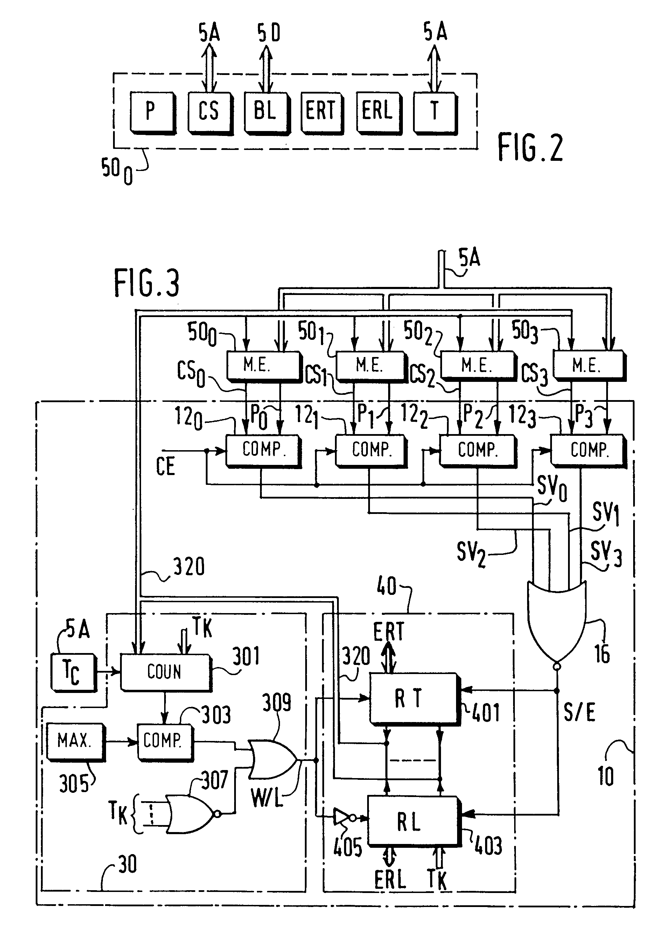

Selon l'invention les champs de bits relatifs à chaque élément-mémoire (par exemple élément-mémoire $50_0$) sont modifiés selon la représentation de la figure 2. Aux champs P, CS, BL, et ERT sont ajoutés les champs ERL et T. Le champ T est un bit qui indique si les informations stockées dans BL sont de type instruction ou de type donnée. Ce champ est issu du processeur qui délivre les informations à la mémoire tampon. Le champ ERL concerne l'état d'occupation de l'élément-mémoire correspondant lors de la mise en oeuvre du remplacement mais ne prend en compte que les opérations relatives au mode limité propre à l'invention.

Sur l'exemple simplifié de la figure 3 est représenté un dispositif de contrôle 10 qui est affecté à une seule classe $K_0$ relative aux éléments-mémoire $50_0$, $50_1$, $50_2$, $50_3$ qui reçoivent leur champ d'adresses du bus 5A. Chaque élément-mémoire transmet sa clé stockée CS à l'un des comparateurs $12_0$, $12_1$, $12_2$, $12_3$ qui reçoivent tous la clé CE de l'adresse d'entrée et qui opèrent la comparaison sous le contrôle des bits de présence respectifs $P_0$ à $P_3$.

En cas d'échec, tous les comparateurs ont leur sortie ($SV_0$ à $SV_3$) à l'état inactif. En cas de succès, un des comparateurs a sa sortie à l'état actif. Une porte NON-OU 16, recevant les signaux $SV_0$ à $SV_3$, permet de délivrer un signal S/E qui définit l'état de succès ou d'échec de l'opération effectuée sur l'adresse courante.

Le contrôle s'opère à l'aide des moyens de partitionnement 30 et des moyens de remplacement 40.

Les moyens de partitionnement 30 comprennent un compteur 301 qui reçoit du bus 5A issu du processeur (figure 2) le bit de type $T_C$ propre à l'adresse courante présente àcet instant sur ce bus 5A. Le compteur 301 est attribué à un type prédéterminé d'informations limitées.

La quantité d'informations de type limité contenues dans la mémoire tampon, représentée par la valeur du compteur, est comparée dans un comparateur 303 à une valeur de la quantité limitée de mémoire prévue pour ce type limité contenue dans un registre 305. Si cette valeur a été dépassée, le comparateur délivre un signal de sortie à l'état bas. Il est à l'état haut dans le cas inverse. La sortie du comparateur 303 entre dans une porte OU 309 qui reçoit la sortie d'une porte NON-OU 307 qui reçoit tous les bits $T_K$ de type de la classe K qui a été activée par l'adresse courante. La porte NON-OU 307 permet de déterminer si un des éléments-mémoire de la classe activée est du type limité.

La sortie de la porte OU 309 délivre le signal W/L qui détermine si le remplacement doit s'effectuer soit sur la totalité (W) des éléments-mémoire de la classe activée soit sur une partie limitée (L) de ceux-ci. Ce signal W/L entre dans les moyens de remplacement 40 qui comprennent un bloc 401 pour un remplacement opérant sur ladite totalité et un bloc 403 pour un remplacement opérant sur ladite partie limitée. Le signal W/L entre directement dans le bloc 401 et entre à travers un inverseur 405 dans le bloc 403 pour activer uniquement celui qui est concerné. Lorsque W/L est à l'état haut il active le bloc 401, et lorsqu'il est à l'état bas il active le bloc 403.

- Le bloc RL 403 contrôle le remplacement des informations de type limité lorsque la quantité limitée est dépassée et lorsqu'au moins une information de type limité est présente dans les informations stockées remplaçables adressées,
- et le bloc RT 401 contrôle le remplacement de toute autre information dans le cas inverse.

Le bloc 401 met en oeuvre un algorithme de remplacement classique, par exemple LRU, FIFO, Random, sur la totalité des éléments-mémoire de la classe sélectionnée. Il reçoit pour cela le champ ERT qui tient compte du mécanisme mis en oeuvre. Par exemple il permet de déterminer s'il s'agit de l'élément utilisé le moins récemment dans le cas de l'algorithme LRU. Le bloc 401 est validé par le signal S/E qui n'est actif qu'en cas d'échec. Le bloc 401 délivre sur le bus 320 l'adresse de l'élément-mémoire sélectionné pour le remplacement. Cette étape de remplacement existe soit lorsque ladite quantité limitée n'est pas dépassée soit lorsque dans la classe sélectionnée aucun des éléments-mémoire ne contient d'information de type limité.

Le bloc 403 opère lorsque la quantité limitée de mémoire disponible pour les informations de type limité a été dépassée et que la classe sélectionnée contient au moins un élément de type limité. Le bloc 403 reçoit le signal S/E actif lors d'un échec, les champs ERL de tous les éléments-mémoire de la classe activée ainsi que leur bit de type $T_K$. Le champ ERL délivre l'ordre selon lequel le remplacement est à effectuer d'après l'algorithme mis en oeuvre et les bits $T_K$ permettent de déterminer ceux ayant le type T correct. L'adresse de l'élément-mémoire sélectionné est transmise par le bus 320 vers les éléments-mémoire. Elle arrive également sur le compteur 301 qui reçoit également, sur le bus $T_K$, le type de l'élément-mémoire sélectionné. Si le type de cet élément-mémoire sélectionné est de type limité, le compteur est alors décrémenté d'une unité pour tenir compte du remplacement. Par ailleurs, le compteur est incrémenté d'une unité si le bit $T_C$ de l'adresse courante indique qu'elle est du type limité.

Il est ainsi possible de remplir la mémoire tampon par un type limité jusqu'à la valeur de la quantité limitée qui lui est attribuée. Il est possible que temporairement cette quantité limitée soit légèrement dépassée. En effet, selon les programmes d'exécution mis en oeuvre, des blocs de données BL peuvent contenir des informations des deux types. Le type attribué à l'élément-mémoire est celui de l'information qui a donné lieu au remplacement. Il est donc possible qu'un léger taux résiduel supplémentaire s'ajoute à la quantité limitée du type limité.

Il peut arriver qu'une classe sélectionnée n'ait pas d'élément de type limité présent pour opérer le remplacement. Un élément de type non limité de la classe est alors remplacé. On calcule que globalement pour l'ensemble de la mémoire tampon, il peut ainsi apparaître un dépassement maximal dans K éléments, qui reçoivent ainsi des éléments de type limité.

Lorsque les informations de type limité ne sont pas présentes en assez grande quantité l'autre type d'informations est alors automatiquement chargé dans la mémoire tampon jusqu'à concurrence de 100 % de remplissage.

Il est possible de définir deux valeurs de quantités limitées relatives à l'un et l'autre type d'informations. Pour ne pas laisser de place inutilisée dans la mémoire tampon (sauf si un autre type d'information est prévu), préférentiellement la somme des quantités limitées doit être supérieure à 100 %. On obtient ainsi une meilleure gestion dynamique de la mémoire tampon.

Les valeurs des quantités limitées peuvent aisément être mises à jour en changeant la valeur contenue dans le registre 305 (figure 3). Lorsque deux valeurs doivent être gérées, les moyens de partitionnement et une partie des moyens de remplacement sont doublés. Il est possible également de modifier ces valeurs au cours du temps.

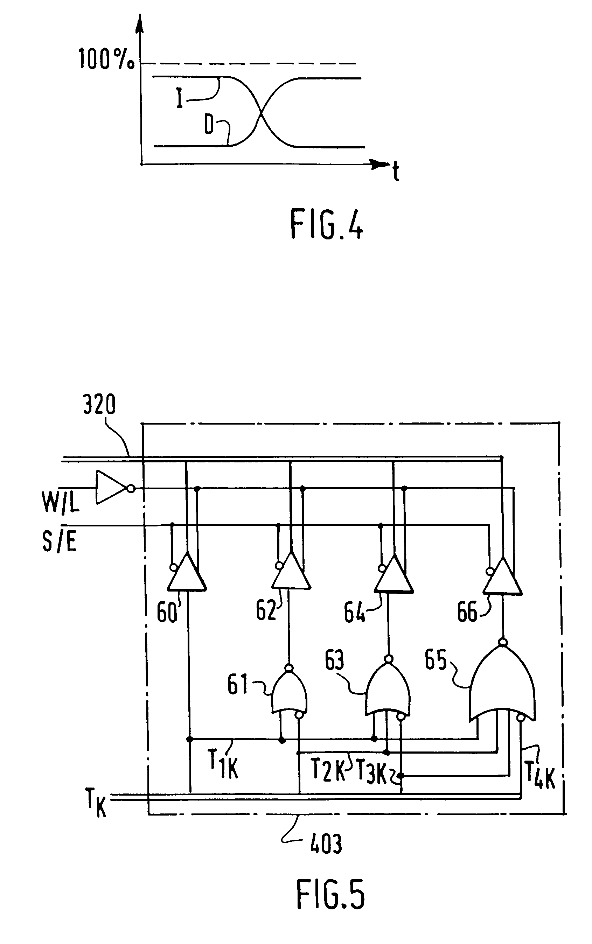

La figure 4 représente un exemple d'évolution avec le temps des types d'informations formés par des instructions I et des données D. Il est possible qu'au début de l'exécution d'un programme par un processeur le taux des instructions I soit élevé alors que le taux des données D soit faible. Les proportions relatives peuvent évoluer et être inversées ensuite. Le renouvellement des valeurs de quantités limitées peut être opéré. Ceci peut se faire en introduisant dans la mémoire tampon soit de l'extérieur des séquences de valeurs prédéterminées soit de l'intérieur des valeurs programmées dynamiquement en liaison avec le programme exécuté par le processeur.

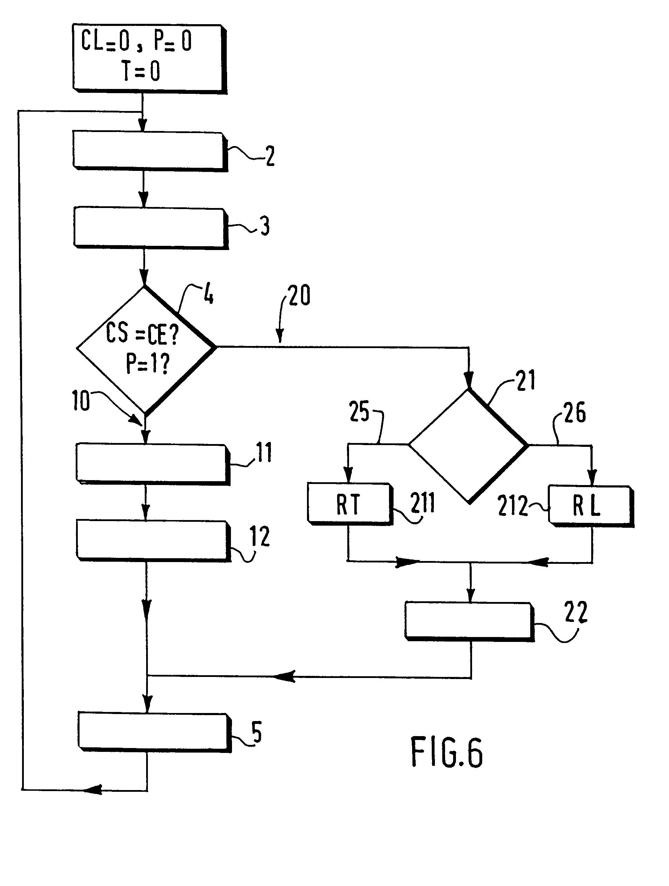

La figure 5 représente un mode de réalisation simplifié du bloc 403 dans le cas d'un algorithme spécifique de fonctionnement opérant sur des informations de type limité pour un exemple limité à 4 éléments-mémoire. Dans ce cas l'ordre du remplacement est spécifique à la structure de ce bloc et les champs ERL n'existent pas explicitement. Pour cet exemple à 4 éléments-mémoire, le bloc 403 reçoit, pour la classe activée K, les bits de type $T_{1K}$, $T_{2K}$, $T_{3K}$ et $T_{4K}$.

Une première porte NON-OU 61 reçoit $T_{1K}$ et $T_{2K}$ inversé.

Une seconde porte NON-OU 63 reçoit $T_{1K}$, $T_{2K}$ et $T_{3K}$ inversé.

Une troisième porte NON-OU 65 reçoit $T_{1K}$, $T_{2K}$, $T_{3K}$ et $T_{4K}$ inversé.

Quatre étages de sortie à trois états 60, 62, 64, 66 reçoivent respectivement :

- $T_{1K}$
- la sortie de la porte NON-OU 61
- la sortie de la porte NON-OU 63
- la sortie de la porte NON-OU 65

Lorsque le signal W/L est actif (mode limité) et que le signal S/E est actif (échec), les quatre étages de sortie laissent passer les signaux présents sur leurs entrées respectives. Ils sont en état haute impédance dans les cas inverses. Ce circuit permet de sélectionner le premier élément-mémoire sélectionnable dans la suite d'éléments qui sont ordonnés selon la réalisation du circuit.

On peut ainsi ordonner les éléments-mémoire selon une telle suite ordonnée pour mettre en oeuvre le remplacement.

La méthode de gestion d'informations qui est mise en oeuvre dans la mémoire tampon est représentée par l'organigramme de la figure 5.

Etape 1 : initialisation : la valeur CL du compteur 301 est mise à zéro ; une valeur de la quantité limitée est stockée : pour chaque élément, son bit de présence P est mis à l'état inoccupé (0 par exemple), son bit de type T est mis à l'état non limité (0 par exemple).

Etape 2 : introduction de l'adresse d'entrée.

Etape 3 : sélection de la classe et détermination de la clé de l'adresse d'entrée.

Etape 4 : recherche d'un succès pour cette adresse : comparaison pour les éléments de la classe, de leurs clés stockées CS et de la clé CE de l'adresse courante et test du bit de présence P.

. s'il y a succès (branche 10), sélection (étape 11) de l'élément-mémoire qui vérifie les conditions de succès, puis lecture ou écriture (étape 12) de la donnée, selon l'opération à effectuer, puis mise à jour de l'état de la mémoire tampon dans les dispositifs de remplacement.

. s'il y a échec sur tous les éléments de la classe, il faut opérer une procédure de remplacement (branche 20).

Etape 21 : comparaison de la valeur contenue dans le compteur avec la valeur de la quantité limitée et test du type des éléments-mémoire de la classe sélectionnée par l'adresse courante. Lorsque le compteur est inférieur à la valeur de base de la quantité limitée ou lorsqu'aucun élément-mémoire n'est du type limité, le mode de remplacement est déterminé par l'algorithme de remplacement de base RT (branche 25) (étape 211).

Lorsque le compteur est supérieur à la valeur de la quantité limitée et lorsqu'il y a au moins un élément-mémoire de type limité sélectionnable, le mode de remplacement est déterminé par l'algorithme de remplacement propre au mode limité RL (branche 26) (étape 212).

Après l'action de l'un ou de l'autre algorithme de remplacement différentes opérations de mise à jour sont nécessaires (compteur, bit de type...) (étape 22).

L'étape 5 représente une étape de modification de la(des) valeur(s) de quantité limitée de mémoire (éventuellement). Celles-ci peuvent être introduites soit isolément, soit en séquences, soit être programmées.

Il est possible que les moyens de partitionnement et/ou les moyens de remplacement soient programmés pour mettre en oeuvre l'invention. Dans le cas le plus général une unité centrale, à l'aide d'un logiciel, détermine la quantité courante d'informations de type limité puis la compare à la quantité limitée de mémoire prévue pour ce type limité. La quantité courante d'informations de type limité est inscrite dans un emplacement mémoire (de la mémoire tampon ou autres). Le logiciel opère également la détection de présence d'éléments-mémoire de type limité dans la classe sélectionnée.

A titre d'exemple, pour mettre en relief les performances obtenues par l'invention on a déterminé les taux d'échecs, dans les conditions suivantes, pour une mémoire tampon de taille globale 256 octets dont chaque élément-mémoire comporte 4 mots de 4 octets. L'algorithme de remplacement LRU a été utilisé comme algorithme de base pour opérer le remplacement selon le mode général global. L'algorithme de remplacement opérant la détermination du plus petit indice voie (tel que déjà exposé) a été utilisé pour opérer le remplacement selon le mode limité. Les résultats sont indiqués sur le tableau I pour lequel la valeur QL de la quantité limitée est exprimée en fraction de la capacité globale de la mémoire tampon. Les résultats sont également exprimés en fonction du nombre d'éléments E par classe.

L'application de l'algorithme de base LRU utilisé sans mise en application de l'invention revient à lire les résultats de la colonne pour une valeur QL de la quantité limitée égale à 16/16. Pour les autres colonnes QL varie de 0/16 à 15/16. On constate que pour une certaine valeur de la quantité limitée les résultats sont optimaux. Ces optima sont représentés sur le tableau II ainsi que les taux d'échecs obtenus par LRU. On observe que lorsque le nombre E d'élément-mémoire par classe augmente, l'amélioration apportée par l'invention devient significative, le taux d'échecs étant mieux que 2 fois plus faible lorsque E = 16 par exemple.

## TAUX D'ECHECS (EN %)

| QL→ E↓ | 0/16 | 1/16 | 2/16 | 3/16 | 4/16 | 5/16 | 6/16 | 7/16 |
|---|---|---|---|---|---|---|---|---|
| 2 | 16,29 | 16,29 | 16,29 | 16,29 | 16,27 | 16,13 | 14,61 | 13,06 |
| 4 | 18,92 | 18,92 | 18,92 | 16,87 | 15,12 | 12,73 | 10,66 | 9,42 |
| 8 | 20,72 | 19,80 | 17,50 | 15,62 | 14,29 | 12,89 | 10,16 | 8,76 |
| 16 | 20,73 | 18,77 | 16,83 | 15,83 | 14,25 | 12,96 | 9,08 | 7,40 |

| QL→ E↓ | 8/16 | 9/16 | 10/16 | 11/16 | 12/16 | 13/16 | 14/16 | 15/16 | 16/16 |
|---|---|---|---|---|---|---|---|---|---|
| 2 | 11,69 | 10,42 | 10,44 | 10,80 | 11,51 | 11,61 | 11,69 | 11,69 | 11,69 |
| 4 | 8,29 | 7,08 | 5,53 | 4,17 | 4,74 | 5,19 | 5,21 | 5,20 | 5,20 |
| 8 | 7,31 | 6,07 | 5,04 | 3,61 | 3,79 | 6,30 | 6,28 | 6,26 | 6,26 |
| 16 | 6,14 | 5,03 | 4,07 | 3,19 | 3,43 | 6,76 | 6,73 | 6,72 | 6,72 |

**TABLEAU I**

| E | invention | LRU |
|---|---|---|
| 2 | 10,42 | 11,69 |
| 4 | 4,17 | 5,20 |
| 8 | 3,61 | 6,26 |
| 16 | 3,19 | 6,72 |

**TABLEAU II**

**Revendications**

1. Dispositif de contrôle pour une mémoire tampon munie de moyens de partitionnement reconfigurable (30) qui distinguent des informations de type "instruction" et des informations de type "donnée", et de moyens de remplacement (40) qui remplacent des informations stockées par des informations courantes selon au moins un algorithme de remplacement, caractérisé en ce que les moyens de partitionnement (30) tendent à limiter, à une quantité prédéterminée, une quantité d'au moins un desdits types d'informations, appelé alors type limité, de sorte que lorsqu'une information courante a à être chargée, les moyens de partitionnement (30), d'abord calculent une quantité globale de mémoire occupée à ce moment par des informations de type limité, puis comparent la quantité globale et la quantité prédéterminée,

   . et lorsque la quantité globale est inférieure ou égale à la quantité prédéterminée, les moyens de remplacement (40) mettent en oeuvre un algorithme classique de remplacement,

   . et lorsque la quantité globale est supérieure à ladite quantité prédéterminée, les moyens de remplacement (40) chargent l'information courante en priorité en remplaçant une information stockée remplaçable de type limité ou à défaut en remplaçant une information stockée de type non limité.

2. Dispositif de contrôle selon la revendication 1 caractérisé en ce que les moyens de remplacement (40) comprennent :

   - un bloc RL (403) qui contrôle le remplacement des informations de type limité lorsque la quantité limitée est dépassée et lorsqu'au moins une information de type limité est présente dans les informations stockées remplaçables adressées,

   - et un bloc RT (401) qui contrôle le remplacement de toute autre information dans le cas inverse.

3. Dispositif de contrôle selon la revendication 1 ou 2, caractérisé en ce que le remplacement de l'information stockée de type limité est effectué (403) selon un algorithme de remplacement spécifique.

4. Dispositif de contrôle selon une des revendications 1 à 3, caractérisé en ce que la valeur de ladite quantité limitée est réactualisable (305).

5. Dispositif de contrôle selon une des revendications 1 à 4, caractérisé en ce qu'au moins une valeur de ladite quantité limitée est chargée dans les moyens de partitionnement (305).

6. Dispositif de contrôle selon une des revendications 1 à 4, caractérisé en ce que les moyens de partitionnement (30) sont programmés pour déterminer la valeur de la quantité limitée.

7. Dispositif de contrôle selon une des revendications 1 à 6, caractérisé en ce que la somme des taux des quantités limitées attribués aux deux types d'informations est supérieure à 100 %.

8. Dispositif de contrôle selon une des revendications 1 à 7, caractérisé en ce que, dans le cas où ladite quantité limitée correspondante a été dépassée, le remplacement d'une information de type limité s'opère en choisissant l'élément mémoire sélectionnable ayant le premier indice de voie dans une suite ordonnée d'indices de voies.

9. Dispositif de contrôle selon une des revendications 1 à 8, caractérisé en ce que les moyens de partitionnement (30) et/ou les moyens de remplacement (40) sont des moyens programmés.

10. Système de traitement de données comprenant des moyens de traitement, des moyens de stockage et une mémoire tampon, interposée entre lesdits moyens, munie d'un dispositif de contrôle selon une des revendications 1 à 9.

FIG.1

EP 0 466 265 A1

FIG.2

FIG.3

FIG.4

FIG.5

13

FIG.6

**Office européen
des brevets**

**RAPPORT DE RECHERCHE
EUROPEENNE**

Numéro de la demande

**EP 91 20 1736**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | EP-A-0 075 714  (SIEMENS)<br>* page 3, ligne 16 - page 5, ligne 22 * * page 7, ligne 9 - ligne 20 * * revendications 5,7,13,25,26 *<br>– – – | 1,3-6,9,2 | G 06 F 12/12<br>G 06 F 12/08 |
| Y | IBM TECHNICAL DISCLOSURE BULLETIN. vol. 27, no. 4B, 1 Septembre 1984, NEW YORK US pages 2683 - 2684; GIRAUD ET AL: 'Computer cache system with priority retention of data over instructions '<br>– – – | 1,3-6,9 | |
| A | EP-A-0 173 909  (IBM)<br>* abrégé *<br>– – – | 1 | |
| A | RESEARCH DISCLOSURE. no. 289, 1 Mai 1988, HAVANT GB page 350; 'Low cost cache replacement ' Article no. 289116<br>* Document entier *<br>– – – – – | 8 | |

**DOMAINES TECHNIQUES
RECHERCHES (Int. Cl.5)**

G 06 F

Le présent rapport de recherche a été établi pour toutes les revendications

| Lieu de la recherche | Date d'achèvement de la recherche | Examinateur |
|---|---|---|
| La Haye | 24 septembre 91 | LEDRUT P. |